# NEW EUROPEAN PATENT SPECIFICATION

(11) **EP 1 221 244 B2**
(45) Date of publication and mention of the opposition decision: **02.12.2009**
(45) Mention of the grant of the patent: 09.11.2005
(21) Application number: 01924543.0
(22) Date of filing: 30.03.2001
(51) Int. Cl.: H04M 1/2745

(54) **METHOD AND APPARATUS FOR ALPHANUMERIC ADDRESS BOOK CONVERSIONS IN A WIRELESS COMMUNICATION APPARATUS**
VERFAHREN UND VORRICHTUNG ZUR KONVERTIERUNG VON ADDRESSBUCHEINTRÄGEN IN EINEM DRAHTLOSEN KOMMUNIKATIONSGERÄT
PROCEDE ET DISPOSITIF POUR CONVERSIONS DE CARNETS D'ADRESSES ALPHANUMERIQUES DANS UN APPAREIL DE COMMUNICATION SANS FIL

(30) Priority: 31.03.2000 US 540068
(43) Date of publication of application: 10.07.2002
(73) Proprietor: QUALCOMM INCORPORATED, San Diego, CA 92121-1714 (US)
(72) Inventor: BURKE, Christine, San Diego, CA 92126 (US); PRITCHARD, Jeff, Vista, CA 92083 (US); KENAGY, Jason, B., San Diego, CA 92104 (US); SPRIGG, Steve, Poway, CA 92064 (US)
(74) Representative: Heselberger, Johannes
(86) International application number: PCT/US2001/010467
(87) International publication number: WO 2001/076200

(56) References cited:
- EP-A- 0 704 827
- EP-A2- 0 458 563
- WO-A-98/35481
- WO-A1-97//12361
- US-A- 5 812 657
- US-A- 5 966 652
- US-B1- 6 289 226

## Description

### Field of the Invention

The present invention pertains generally to the field of wireless communications, and more specifically to converting alphanumeric characters within an address book in a wireless communication device.

### Background

The field of wireless communications has many applications including, e.g., cordless telephones, paging, cellular, wireless local loops, and satellite communication systems. A particularly important application is cellular telephone systems which also include Personal Communications Services (PCS) for mobile subscribers.

Wireless communication devices, such as cellular telephones, are widely used as a replacement for conventional telephone systems. Hereinafter the term cellular will be used to refer to any wireless communication device. In addition to functioning as a replacement for a conventional telephone, wireless communication devices offer the advantage of portability, thus enabling the user to establish a wireless communication link between virtually any two locations on Earth.

In addition to conventional voice communication, wireless communication devices also provide features such as voicemail, voice messaging, and automatic callback notification. Callback notification allows a caller to automatically transmit his telephone number to simplify the process of returning a call. For example, the user of a wireless telephone may place a call (the calling party) that is not received by the intended recipient. A message may be left for the intended recipient (the called party) and include a "callback number," which corresponds to the caller's mobile identification number. The message recipient may readily establish a communication link with the wireless communication device using the callback number.

Other features, such as three-way calling, are also readily implemented using the conventional communication device. The user of the wireless communication device may establish a first communication link by selecting a stored telephone number from a telephone book storage area within the wireless communication device. When the first communication link is established, the user establishes the second communication link by manually entering a second destination telephone number or by selecting a second destination telephone number from the telephone book storage area.

An additional group of features include directory services. Typical services provide for the storage and dialling of telephone numbers stored in memory as part of a telephone directory. Such telephone numbers are typically associated with a name that is represented by an alphanumeric character string. Traditional directory services fall short in some instances. For example, when entering a telephone number that can be represented by an alphanumeric string, the user often has to translate the alphanumeric string manually into a numeric string when either dialling or entering the number into the telephone directory. What is needed is a mechanism to provide for the automatic translation and dialling of an alphanumeric string with a minimum of difficulty.

US Patent No. 5,966,652 describes a system and method for the insertion and extraction of telephone numbers from a wireless text message. Start and termination delimiters are used to identify data corresponding to a call-back number.

### Summary of the Invention

According to the present invention, there is provided a wireless communication apparatus and a method of communicating in a wireless communication apparatus as set forth in claims 1 and 8, respectively.

The preferred embodiment of the invention is directed to an apparatus and method for allowing a wireless communication device to conveniently convert alphanumeric characters into numeric characters for dialling. Any alphanumeric characters saved in address book phone entries will be automatically converted to phone numeric equivalents when dialled. For example, a stored number of 1-800-2EUDORA is treated as 18002383672 when dialled. The unit accepts input from memory into an Alphanumeric to Numeric Converter where the letters and non integers are converted into numbers to be dialled. The converted number is then passed through an undefined character filter where undefined characters are eliminated. The output is then sent to a display where an optional confirmation step takes place before the wireless communication device dials the intended number.

The device may further include a Personal Digital Assistant (PDA) as part of the wireless communication device. The unit accepts input from memory that has been highlighted on the PDA display. As in the previous embodiment, the unit accepts input from memory into a Alphanumeric to Numeric Converter where the letters an non integers are converted into numbers to be dialled. The converted number is then passed through an undefined character filter where undefined characters are eliminated. The output is then sent to a display where an optional confirmation step takes place before the wireless communication device dials the intended number.

The invention may also be directed to treating highlighted text as a destination address, such as an e-mail address or as a Uniform Resource Locator used to access an internet site.

Embodiments of the invention will be further described with reference to the following drawings.

### Brief Description of the Drawings

Fig. 1 illustrates a radiotelephone system in which an embodiment of the current invention operates.
Fig. 2 illustrates a radiotelephone unit in which an embodiment of the current invention operates.
Fig. 3 illustrates in functional form a block diagram of a specific embodiment of the invention.
Fig. 4 illustrates in flowchart form a method of operation of an embodiment of the present invention.

### Detailed Description of the Preferred Embodiment

An illustrative implementation of a microprocessor-based telephone system in accordance with the invention is presented here. The illustration uses an automobile cellular phone as an example, but it will be understood by those skilled in the art that the invention can be implemented in virtually any telecommunications system.

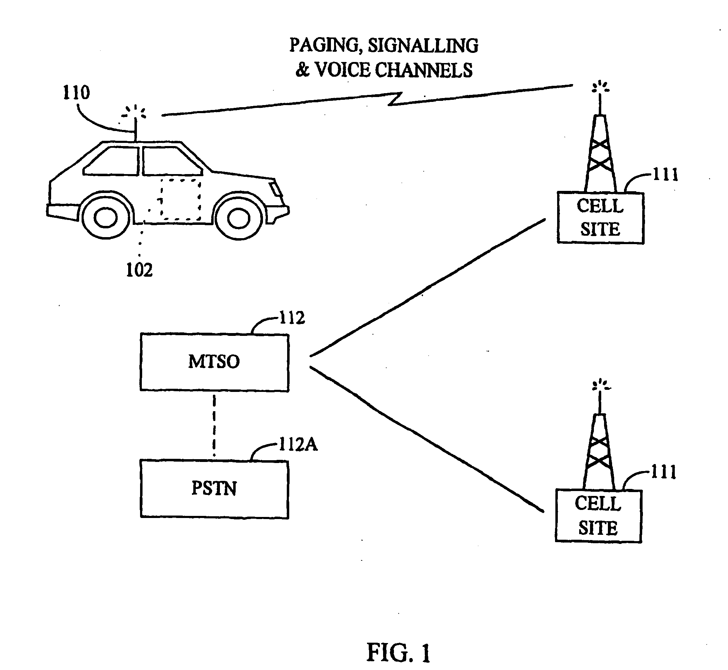

Fig. 1 illustrates a typical wireless radiotelephone system including a mobile station 102 having a unique mobile identification number (MID) stored in a suitable location such as FLASH memory or in an electrically eraseable programmable read-only memory (EEPROM, not shown). Telephone units of this kind are well known in the art and are described here only in sufficient detail to aid understanding the invention. Mobile station 102 communicates with cell site 111 through antenna 110 via paging, signaling and voice/data channels. Cell site 111 (two are illustrated) communicates to Mobile Terminal Switching Office (MTSO) 112 via a radiolink or landline and then to the Public Switched Telephone Network (PSTN) 112A via a high capacity landline or similar connection.

Such mobile stations are typically hand held devices but historically have been associated with an automobile. However, the embodiments described within refer to any wireless device, whether or not handheld, mobile, fixed in location or any combination thereof.

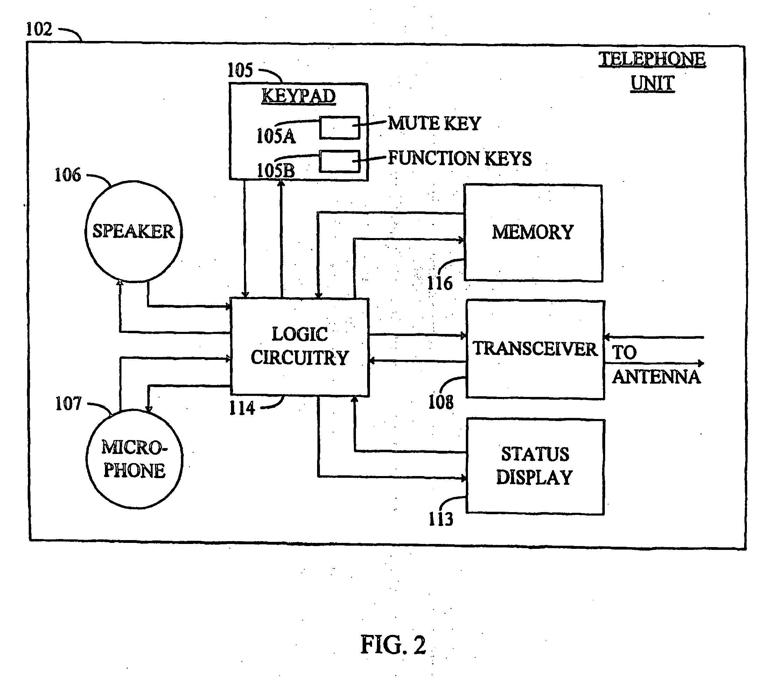

Referring now to Fig. 2, the telephone unit 102 includes a handset having a keypad 105; equivalently, the keypad 105 could be located separately from the handset. Also included in the telephone unit 102 are a speaker 106 and a microphone 107, shown as being mounted within the handset 104 but either or both of which could equivalently be mounted apart from the handset, either separately (e.g., in a telephone operator's headset or in wall mountings), or approximately together (e.g.. in a walkie-talkie or speakerphone configuration). It will be apparent to those of ordinary skill that if the keypad 105, the speaker 106, and the microphone 107 are all located apart from the handset 104, the handset can be dispensed with.

Additionally, any reference to a soft key is also intended to be equivalent to a smart key that is programmable to represent a predefined function, a menu selected option from a display screen, a selectable icon or any other type of input.

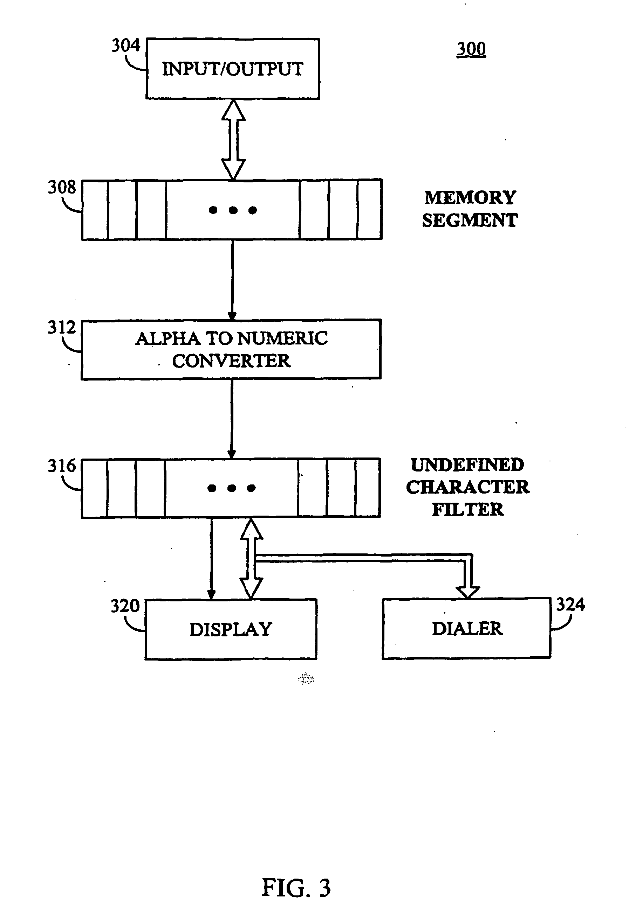

Fig. 3 illustrates a functional block diagram of an embodiment of the instant invention. Apparatus 300 includes a mechanism for converting alphanumeric characters into numeric characters for dialing a telephone device. An optional input/output device 304 is bi-directionally connected with an internal memory segment 308. Internal memory segment 308 containing an input segment string is operationally connected to alphanumeric to numeric converter 312 for translating. Alphanumeric converter 312 is operationally connected to a filter 316 for filtering undefined characters from the translated segment string. The character filter is operably connected to a display 320 for viewing the translated number for dialing and is also connected to a dialer 324 for dialing the translated number. Note that input/output device 304 may contain display 320.

The operation of apparatus 300 will now be discussed in further detail. In one embodiment of the invention, input/output device 304 includes an input touch screen display as found in the QUALCOMM® pdQ™ smartphone, which is now manufactured and sold by Kyocera Wireless Corporation. Background for the pdQ™ may be found at http://www.kyocera-wireless.com/pdq/index.html, as of the date of this filing. Input/output 304 also optionally includes a standard touchpad and/or microphone speaker combination for audio input/output. A user selectively inputs alphanumeric characters into wireless apparatus 300 via a user keypad. Such a keypad is similar in nature to the keypad found on a conventional telephone where the alphabet is mapped to a set of numeric keys. For example, A, B and C are mapped to the number 2 on the conventional keypad. D, E and F are mapped to the number 3, and so forth. A string of alphanumeric characters is entered via the keypad or external keyboard. In an embodiment of the invention, any input beyond 32 characters is truncated, such as when a telephone number is to be dialed.

When using the display as found in the QUALCOMM® pdQ™ smartphone, the user selects an alphanumeric text string from the display. The user executes the dialer function by selecting the dialer icon from the display menu. In both the keypad and display cases, the system then begins conversion of the alphanumeric string to numeric string in converter 312.

Note that there are many ways the alphanumeric string may be entered into memory segment 308. The alphanumeric string may be the result of a voice to text conversion, the result of a physical interchange of electrical, infrared or photonic signals from an external detached source or from some other internal or external source. Additionally, the alphanumeric string may be selected from the display by highlighting a portion of a text string found on the display. The portion of text may be part of a written text file or from text or other input retrieved from a browser while connected to an external source. The text may be part of or found within an electronic mail or attachment received or transferred to the wireless device. The text may otherwise be any part of a text or character segment found in the course of using a Personal Digital Assistant (PDA).

The converted string is then passed from converter 312 to character filter 316. Character filter 316 strips out any characters that have not been defined within its parameters. These characters may include but are not limited to the "-" (dash) character conventionally used to separate groups of digits when writing a phone number.

The output of the character filter is then sent to display 320 for viewing and to dialer 324, either simultaneously or in serial after confirmation from the user. In an embodiment of the invention, any output beyond 32 characters is truncated, such as when a telephone number is to be dialed.

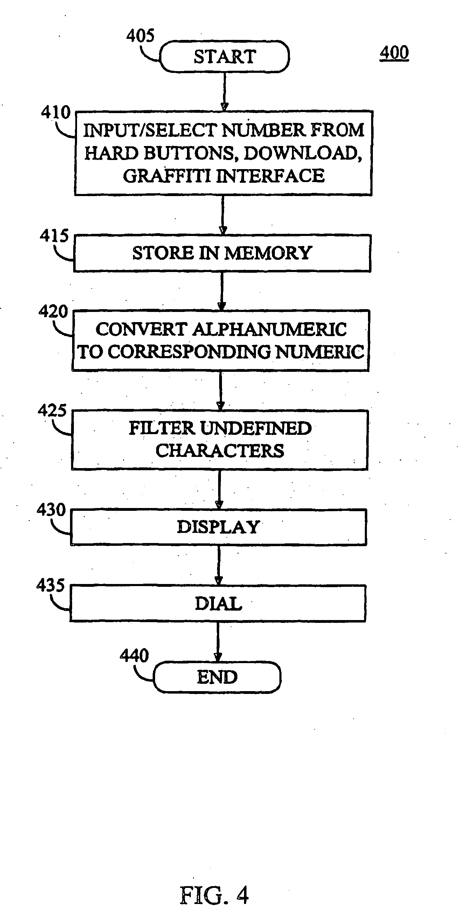

Fig. 4 illustrates in flowchart format the operation 400 of an embodiment of the present invention. The process begins in step 405 labeled START. Flow control transfers to step 410, where a user downloads information into the unit via keys on the face of the unit, through an automatic download or via hand entry via a Graffiti interface. A Graffiti interface uses a stylus for writing in a specialized alphabet on a touch screen. Interface software translates handwritten writings in the specialized alphabet to a format readable by the unit. The entries are then stored in memory in step 415.

In step 420 the Alphanumeric to Numeric converter 312 ignores the appropriate characters and converts the rest to a numeric number for dialing. In step 425, the undefined characters are then stripped off the translated number. The translated number is displayed in step 430, while the number is dialed in step 435 before control is passed to step 440 END.

Data information may be stored in a Personal Information Manager (PIM). Such a PIM may be of the form of a software program resident on a Personal Computer or may take the form of a built in program found in a Personal Digital Assistant (PDA). PIMs and PDAs typically are used as organizational tools and typically contain scheduling and address (contact) information. PIM/PDAs are well known in the art and need not be discussed in further detail here. Such a PIM/PDA may be integral to the phone or may be operationally connected with the phone in a number of ways, including direct physical connection, wireless radio frequency (RF) connection or infrared (IR) connection.

The user's phone may be synchronized with a PIM/PDA either continuously or on a periodic basis. For example, a user will enter his contact directory portions of his/her schedule from the PIM/PDA into the phone.

It is to be understood that even though various embodiments and advantages of the present invention have been set forth in the foregoing description, the above description is illustrative only, and changes may be made in detail, yet remain within the broad principles of the invention. For example, it should be noted that the claimed invention applies to any device that can update a phonebook directory and is not limited to wireless communication devices.Therefore, the present invention is to be limited only by the appended claims.

## Claims

1. A wireless communication apparatus (102 to 110, 113 to 116, 300 to 324) comprising:
a transceiver (108) adapted to transmit and receive wireless radio transmissions;
an input/output device (105, 106, 107, 113, 304, 320) adapted to accept input and providing output;
a dialler (324) adapted to accept and provide a destination number to the transceiver (108) for an intended transmission; **characterised by**:
a memory (116, 308) adapted to store an alphanumeric input string as an address book phone entry;
a processor (114, 312) adapted to accept the alphanumeric input string and to automatically convert upon dialling the alphabetic characters therein to numeric characters ignoring other characters to obtain a translated segment string including the converted characters and the other ignored characters; and
a filter (114, 316) adapted to filter out both predetermined and undefined characters from within the translated segment string, the filtered, translated segment string being in a format suitable as the destination number for said dialler (324).

2. The wireless communication device (102 to 110, 113 to 116, 300 to 324) as in claim 1, wherein said destination number is a telephone number.

3. The wireless communication device (102 to 110, 113 to 116, 300 to 324) as in claim 1 or 2, comprising an input mechanism (105, 105B, 304) for confirming a destination number prior to dialling.

4. The wireless communication device (102 to 110, 113 to 116, 300 to 324) as in any preceding claim, wherein said predetermined character includes a "-".

5. The wireless communication device (102 to 110, 113 to 116, 300 to 324) as in any preceding claim, wherein said wireless radio transmissions include voice and/or data.

6. The wireless communication device (102 to 110, 113 to 116, 300 to 324) as in any preceding claim, wherein said input/output device (105, 10, 107, 113, 304, 320) comprises a display (113, 320), said wireless communication device (102 to 110, 113 to 116, 300 to 324) further comprising means for selecting the input segment string by highlighting a portion of a string on the display (113, 320).

7. A wireless personal digital assistant communication device comprising the wireless communication device (102 to 110, 113 to 116, 300 to 324) according to any preceding claim.

8. A method of communicating for use in a wireless communication apparatus (102 to 110, 113 to 116, 300 to 324) including a transceiver (108) for transmitting and receiving wireless radio transmissions and a dialler (324) for accepting an providing a destination number to the transceiver (108) for an intended transmission, the method comprising:
receiving (105, 106, 107, 113, 304, 320) an alphanumeric input segment string in said wireless communication apparatus (102 to 110, 113 to 116, 300 to 324), **characterised by**:
storing the alphanumeric input segment string in internal memory (116, 308) as an address book phone entry;
converting (114, 312) automatically upon dialling the alphabetic characters of the input segment string from the internal memory (116, 308) to numeric characters ignoring other characters to obtain a translated character string including the converted characters and the other ignored characters;
filtering (114, 316) out both predetermined and undefined characters from within the translated segment string to obtain the destination number, the destination number being in a form suitable for said dialler (324); and setting up a communication link from said wireless communication apparatus (102 to 110, 113 to 116, 300 to 324) based on said destination number.

9. The method as in claim 8, further comprising: setting up the communication link by dialling said destination number, wherein said destination number is a telephone number.

10. The method as in claim 8 or 9, further including displaying said destination number on a display (113, 320).

11. The method of claim 10, including confirming the destination number prior to dialling.

12. The method of claim 11, wherein confirming the final value comprises 30 accepting an external input prior to dialling.

13. The method of claim 12, wherein said accepting comprises accepting an external input from a keyboard (105).

14. The method of any one of claims 10 to 13, wherein said input segment string is selected by a user of the apparatus by highlighting a portion of a string on the display (113, 320).

## Patentansprüche

1. Eine drahtlose Kommunikations- bzw. Nachrichten Vorrichtung (102 bis 110, 113 bis 116, 300 bis 324), die Folgendes aufweist:
einen Transceiver (108) angepasst zum Senden und Empfangen von drahtlosen Funkübertragungen;
eine Eingabe/Ausgabeeinrichtung (105, 106, 107, 113, 304, 320) angepasst zum Akzeptieren von Eingabe und Vorsehen von Ausgabe;
eine Wählvorrichtung bzw. Wähler (Dialler) (324) angepasst zum Akzeptieren und Vorsehen einer Zielnummer für den Transceiver (108) für eine beabsichtigte Übertragung; **gekennzeichnet durch**:
einen Speicher (116, 308) angepasst zum Speichern eine alphanumerische Eingabesegmentzeichenkette als einen Adressbuchtelefoneintrag;
einen Prozessor (114, 312) angepasst zum Akzeptieren der alphanumerischen Eingabesegmentzeichenkette und zum automatischen Konvertieren beim Einwählen der alphabetischen Zeichen darin in numerische Zeichen, wobei andere Zeichen nicht berücksichtigt werden, um eine übersetzte Segmentzeichenkette zu erhalten, die sowohl die konvertierten Zeichen als auch die anderen nicht berücksichtigten Zeichen enthält; und
einen Filter (114, 316) angepasst zum Herausfiltern sowohl vorher bestimmter als auch undefinierter Zeichen aus dem Inneren der übersetzten Segmentzeichenkette, wobei die gefilterte übersetzte Segmentzeichenkette in einem Format ist, das als die Zielnummer für den genannte Wähler (324) geeignet ist.

2. Drahtlose Kommunikationsvorrichtung (102 bis 110, 113 bis 116, 300 bis 324) nach Anspruch 1, wobei die genannte Zielnummer eine Telefonnummer ist.

3. Drahtlose Kommunikationsvornchtung (102 bis 110, 113 bis 116, 300 bis 324) nach Anspruch 1 oder 2, die einen Eingabemechanismus (105, 105B, 304) aufweist, und zwar zum Bestätigen einer Zielnummer vor dem Wählen.

4. Drahtlose Kommunikationsvorrichtung (102 bis 110, 113 bis 116, 300 bis 324) nach einem der vorhergehenden Ansprüche, wobei das genannte vorherbestimmte Zeichen ein "-" aufweist.

5. Drahtlose Kommunikationsvorrichtung (102 bis 110, 113 bis 116, 300 bis 324) nach einem der vorhergehenden Ansprüche, wobei die genannten drahtlosen Funkübertragungen Sprache und/oder Daten aufweisen.

6. Drahtlose Kommunikationsvorrichtung (102 bis 110, 113 bis 116, 300 bis 324) nach einem der vorhergehenden Ansprüche, wobei die genannte Eingabe-/Ausgabevorrichtung (105, 106, 107, 113, 304, 320) eine Anzeige (113, 320) aufweist, wobei die genannte drahtlose Kommunikationsvorrichtung (102 bis 110, 113 bis 116, 300 bis 324) ferner Mittel aufweist zur Auswahl der Eingabesegmentzeichenkette und zwar durch Hervorheben eines Teils einer Zeichenkette auf der Anzeige (113, 320).

7. Eine drahtlose Persönliche-Digitale-Assistenten (personal digital assistant)-Kommunikations- bzw. Nachrichtenvorrichtung, die die drahtlose Kommunikationsvorrichtung (102 bis 110, 113 bis 116, 300 bis 324) gemäß irgendeinem vorhergehenden Anspruch aufweist.

8. Ein Verfahren zum Kommunizieren bzw. zur Nachrichtenübertragung zum Verwenden in einer drahtlosen Nachrichten- bzw. Kommunikationsvorrichtung (102 bis 110, 113 bis 116, 300 bis 324) einschließlich eines Transceivers (108) zum Senden bzw. Übertragen und Empfangen von drahtlosen Funkübertragungen und eines Wählers bzw. einer Wählvorrichtung (324) zum Akzeptieren und Vorsehen einer Zielnummer an den Transceiver (108) und zwar für eine beabsichtige Übertragung, wobei das Verfahren Folgendes aufweist:
Empfangen (105, 106, 107,113, 304, 320) einer alphanumerischen Eingabesegmentzeichenkette in die genannte drahtlose Kommunikationsvorrichtung (102 bis 110, 113 bis 116, 300 bis 324), **gekennzeichnet durch: Speichern der alphanumerischen Eingabesegmentzeichenkette in internen Speicher (116, 308) als einen** Adressbuchtelefoneintrag; Automatischen Konvertieren (114, 312) beim Einwählen der alphabetischen Zeichen der Eingabesegmentzeichenkette aus dem internen Speicher (116, 308) in numerische Zeichen, wobei andere Zeichen nicht berücksichtigt werden, um eine übersetzte Segmentzeichenkette zu erhalten, die sowohl die konvertierten Zeichen als auch die anderen nicht berücksichtigten Zeichen enthält;
Herausfiltern (114, 316) sowohl vorbestimmter als auch undefinierter Zeichen und zwar aus dem Inneren der übersetzten Segmentzeichenkette, um die Zielnummer zu erhalten, wobei die Zielnummer in einer Form ist, die für den genannten Wähler (324) geeignet ist; und
Aufbauen (setting up) einer Kommunikations- bzw. Nachrichtenverbindung von der genannten drahtlosen Kommunikationsvorrichtung (102 bis 110, 113 bis 116, 300 bis 324) und zwar basierend auf der genannten Zielnummer.

9. Verfahren nach Anspruch 8, das ferner Folgendes aufweist:
Aufbau der Kommunikationsverbindung durch Wählen der genannten Zielnummer, wobei die genannte Zielnummer eine Telefonnummer ist.

10. Verfahren nach Anspruch 8 oder 9, das ferner Anzeigen der genannten Zielnummer auf einem Display (113, 320) aufweist.

11. Verfahren nach Anspruch 10, das Bestätigen der Zielnummer vor dem Wählen aufweist.

12. Verfahren nach Anspruch 11, wobei das Bestätigen des finalen bzw. endgültigen Wertes das Akzeptieren einer externen Eingabe vor dem Wählen aufweist.

13. Verfahren nach Anspruch 12, wobei das genannte Akzeptieren, Akzeptieren einer externen Eingabe von einer Tastatur (105) aufweist.

14. Verfahren nach irgendeinem der Anspruche 10 bis 13, wobei die genannte Eingabesegmentzeichenkette von einem Nutzer der Vorrichtung ausgewählt wird und zwar durch Hervorheben eines Teils einer Zeichenkette auf der Anzeige (113, 320).

## Revendications

1. Un dispositif de communication sans fil (102 à 110, 113 à 116, 300 à 324) comprenant :
un émetteur/récepteur (108) apte à émettre et recevoir des transmissions radio sans fil ;
un dispositif d'entrée/sortie (105, 106, 107, 113, 304, 320) apte à accepter une entrée et à fournir une sortie ;
un composeur (324) apte à accepter et fournir un numéro de destination à l'émetteur/récepteur (108) pour une transmission envisagée ; **caractérisé par** :
une mémoire (116, 308) apte à mémoriser une chaîne d'entrée alphanumérique en tant que rubrique téléphonique de répertoire ;
un processeur (114, 312) apte à accepter la chaîne d'entrée alphanumérique et à convertir automatiquement à la composition les caractères alphabétiques qui s'y trouvent en caractères numériques en ignorant les autres caractères afin d'obtenir une chaîne de segment transcodée incluant les caractères convertis et les autres caractères ignorés ; et
un filtre (114, 316) apte à éliminer par filtrage les caractères aussi bien prédéterminés que non définis se trouvant dans la chaîne de segment transcodée, la chaîne de segment transcodée filtrée étant dans un format convenant en tant que numéro de destination pour ledit composeur (324).

2. Le dispositif de communication sans fil (102 à 110, 113 à 116, 300 à 324) de la revendication 1, dans lequel ledit numéro de destination est un numéro de téléphone.

3. Le dispositif de communication sans fil (102 à 110, 113 à 116, 300 à 324) de la revendication 1 ou 2, comprenant un mécanisme d'entrée (105, 105B, 304) pour confirmer un numéro de destination avant composition.

4. Le dispositif de communication sans fil (102 à 110, 113 à 116, 300 à 324) de l'une des revendications précédentes, dans lequel ledit caractère prédéterminé comprend un "-".

5. Le dispositif de communication sans fil (102 à 110, 113 à 116, 300 à 324) de l'une des revendications précédentes, dans lequel lesdites transmissions radio sans fil comprennent de la voix et/ou des données.

6. Le dispositif de communication sans fil (102 à 110, 113 à 116, 300 à 324) de l'une des revendications précédentes, dans lequel ledit dispositif d'entrée/sortie (105, 10, 107, 113, 304, 320) comprend un afficheur (113, 320), ledit dispositif de communication sans fil (102 à 110, 113 à 116, 300 à 324) comprenant en outre des moyens pour sélectionner la chaîne de segment d'entrée en mettant en évidence une partie d'une chaîne sur l'afficheur (113, 320).

7. Un dispositif de communication sans fil d'assistant numérique personnel comprenant le dispositif de communication sans fil (102 à 110, 113 à 116, 300 à 324) selon l'une des revendications précédentes.

8. Un procédé de communication utilisable dans un dispositif de communication sans fil (102 à 110, 113 à 116, 300 à 324) comprenant un émetteur/récepteur (108) pour émettre et recevoir des transmissions radio sans fil et un composeur (324) pour accepter et fournir un numéro de destination à l'émetteur/récepteur (108) pour une transmission envisagée, le procédé comprenant :
la réception (105, 106, 107, 113, 304, 320) d'une chaîne de segment d'entrée alphanumérique dans ledit dispositif de communication sans fil (102 à 110, 113 à 116, 300 à 324),
la mémorisation de la chaîne de segment d'entrée alphanumérique dans une mémoire interne (116, 308) en tant que rubrique téléphonique de répertoire ;
la conversion (114, 312) automatique, à la composition, des caractères alphabétiques de la chaîne de segment d'entrée à partir de la mémoire interne (116, 308) en caractères numériques en ignorant les autres caractères afin d'obtenir une chaîne de caractères transcodée incluant les caractères convertis et les autres caractères ignorés,
l'élimination par filtrage (114, 316) des caractères aussi bien prédéterminés que non définis se trouvant dans la chaîne de segment transcodée pour obtenir le numéro de destination, le numéro de destination étant dans un format convenant audit composeur (324) ; et
l'établissement d'une liaison de communication à partir dudit dispositif de communication sans fil (102 à 110, 113 à 116, 300 à 324) sur la base dudit numéro de destination.

9. Le procédé de la revendication 8, comprenant en outre : l'établissement de la liaison de communication par composition dudit numéro de destination, ledit numéro de destination étant un numéro de téléphone.

10. Le procédé de la revendication 8 ou 9, comprenant en outre l'affichage dudit numéro de destination sur un afficheur (113, 320).

11. Le procédé de la revendication 10, comprenant la confirmation du numéro de destination avant composition.

12. Le procédé de la revendication 11, dans lequel la confirmation de la valeur finale comprend l'acceptation d'une entrée externe avant composition.

13. Le procédé de la revendication 12, dans lequel ladite acceptation comprend l'acceptation d'une entrée externe à partir d'un clavier (105).

14. Le procédé de l'une des revendications 10 à 13, dans lequel ladite chaîne de segment d'entrée est choisie par un utilisateur du dispositif par mise en évidence d'une partie d'une chaîne sur l'afficheur (113, 320).
